# EUROPÄISCHE PATENTANMELDUNG

(11) **EP 1 776 853 A1**
(43) Veröffentlichungstag der Anmeldung: **25.04.2007**
(21) Anmeldenummer: 06021486.3
(22) Anmeldetag: 13.10.2006
(51) Int. Cl.: A01B 69/02

(54) **Spuranreißer für eine landwirtschaftliche Maschine**

(30) Priorität: 19.10.2005 DE 102005049939
(71) Anmelder: Amazonen-Werke H. Dreyer GmbH & Co. KG, 49205 Hasbergen (DE)
(72) Erfinder: Ammermann, Wilfried, 26203 Wardenburg (DE); Hoffmann, Karl-Peter, 27798 Hude (DE)

(57) **Zusammenfassung**

Spuranreißer für eine landwirtschaftliche Maschine, der in deren Seitenbereich mittels eines zumindest zwei Leitungsanschlüsse aufweisenden doppelt wirkenden Hydraulikzylinder ein - und ausschwenkbar an Rahmenteilen der Maschine angeordnet ist. Um ein stufenweises Einschwenken und Ausschwenken des Spuranreißers in einfacher Weise in vorgegebener Weise zu ermöglichen, ist vorgesehen, dass an dem Hydraulikzylinder und beabstandet zu den beiden angeschlossenen Hydraulikleitungen zumindest eine weitere Hydraulikleitung angeschlossen ist, dass die zusätzliche Hydraulikleitung und die eine der in dem Endbereich des Hydraulikzylinders angeschlossenen Leitungen an ein 3/2-wegeventil angeschlossen sind, dass von dem 3/2-Wegeventil eine Hydraulikleitung zu einem Steuerventil führt, dass an diesem Steuerventil, die andere der in dem Endbereich des Hydraulikzylinders angeschlossenen Leitungen angeschlossen ist.

## Beschreibung

Die Erfindung betrifft einen Spuranreißer für eine landwirtschaftliche Maschine gemäß des Oberbegriffes des Patentanspruches 1.

Ein derartiger Spuranreißer ist beispielsweise durch die DE 196 34 934 A1 bekannt. Dieser Spuranreißer ist im Seitenbereich der Maschine angeordnet und mittels eines zwischen dem Spuranreißer und dem Zwischenhebel angeordneten Hydraulikzylinders aus der Arbeitsposition in eine zumindest annähernd senkrechte Position anzuheben. Dieses Anheben ist erforderlich, wenn der Spuranreißer in wechselseitiger Weise zu dem auf der anderen Seite der Maschine angeordneten Spuranreißer angehoben oder abgesenkt werden soll. Auch ist das Anheben des Spuranreißers erforderlich, wenn die Maschine an Hindernissen vorbei passieren muss. Nachteilig ist jedoch, wenn der Spuranreißer angehoben werden muss, um z.B. unter Bäumen hindurch zu fahren, dass der Spuranreißer nur senkrecht und nicht weiter einzuklappen ist. Um den Spuranreißer weiter einzuklappen, ist es erforderlich, dass das einschwenkbare Seitenteil mit eingeklappt wird, weil das weitere Stellelement, welches zwischen dem Zwischenhebel und dem Rahmen angeordnet ist, lediglich als längeneinstellbare Lenkerstange ausgebildet ist, und die weitere Einklappbewegung über die Kopplung dieses Stellelementes mit dem Einschwenkgestänge erfolgt. Über das Einschwenkgestänge wird der Zwischenhebel über die Lenkerstange mit dem Spuranreißer eingeschwenkt.

Der Erfindung liegt die Aufgabe zugrunde, ein stufenweises Einschwenken und Ausschwenken des Spuranreißers in einfacher Weise in vorgegebener Weise zu ermöglichen.

Diese Aufgabe wird erfindungsgemäß durch das kennzeichnende Merkmal des Patentanspruches 1 gelöst. Infolge dieser Maßnahme wird ein in definierter Weise zweistufig ein- und ausfahrender Hydraulikzylinder geschaffen, mit welchem der Spuranreißer stufenweise ein- und auszuklappen ist. Somit ist ein einfaches stufenweises Einschwenken des Spuranreißers zum Senkrechtstellen des Spuranreißers während der Arbeit der landwirtschaftlichen Maschine möglich, ohne ihn vollständig einklappen zu müssen. Das vollständige Einklappen ist durch den erfindungsgemäß Hydraulikzylinder ebenfalls möglich, wenn durch die zweite Stufe des Hydraulikzylinders der Hydraulikzylinder ganz eingefahren wird, um den Spuranreißer ganz einzuklappen.

Eine vorteilhafte Anordnung der zusätzlichen Hydraulikleitung ergibt sich dadurch, dass die zusätzliche Hydraulikleitung zumindest annähernd in der Mitte der Hublänge des Hydraulikzylinders angeschlossen ist.

Um den Spuranreißer über einen Schwenkbereich von größer als 180° durch den Hydraulikzylinder bewegen zu können, ist vorgesehen, dass zwischen dem Spuranreißer und dem Hydraulikzylinder ein scherenartiges Hebelelement angeordnet ist.

Weitere Einzelheiten der Erfindung sind der Beispielsbeschreibung und den zeichnungen zu entnehmen. Hierbei zeigen
- Fig. 1: die an dem Scharträger angeordneten Spuranreißer in der Ansicht von hinten, wobei der linke Spuranreißer in Anreißstellung und der rechte Spuranreißer in angehobenem Zustand sich befindet und in Prinzipdarstellung,
- Fig. 2: die an dem Scharträger angeordneten Spuranreißer in der Ansicht von hinten, wobei der rechts Spuranreißer in Anreißstellung und der links Spuranreißer in angehobenem Zustand sich befindet und in Prinzipdarstellung,
- Fig. 3: die an dem Scharträger angeordneten Spuranreißer in der Ansicht von hinten, wobei der linke Spuranreißer ganz eingeklappt ist und der rechte Spuranreißer in Außerbetriebsstellung ist und in Prinzipdarstellung,
- Fig. 4: die an dem Scharträger angeordneten Spuranreißer in der Ansicht von hinten, wobei beide Spuranreißer ganz eingeklappt sind und in Prinzipdarstellung,
- Fig. 5: der in Transportstellung angehobene Scharbalken mit eingeklappten Spuranreißern in der Ansicht von hinten und in Prinzipdarstellung,
- Fig. 6: den linken Spuranreißer in Anreißstellung in der Ansicht von hinten und in vergrößertem Maßstab und in Prinzipdarstellung,
- Fig. 7: der Spuranreißer in Außerbetriebsstellung in der Ansicht von hinten in Außerbetriebsstellung und in Prinzipdarstellung,
- Fig. 8: der Spuranreißer in ganz eingeklappter Stellung in vergrößertem Maßstab in der Ansicht von hinten und in Prinzipdarstellung und
- Fig. 9: den Hydraulikschaltplan für die den Spuranreißer zugeordneten Hydraulikzylindern, wobei die Spuranreißer entsprechend Fig. 4, 5 und 8 eingeklappt sind und kein Spuranreißer zur Betätigung vorgewählt ist.

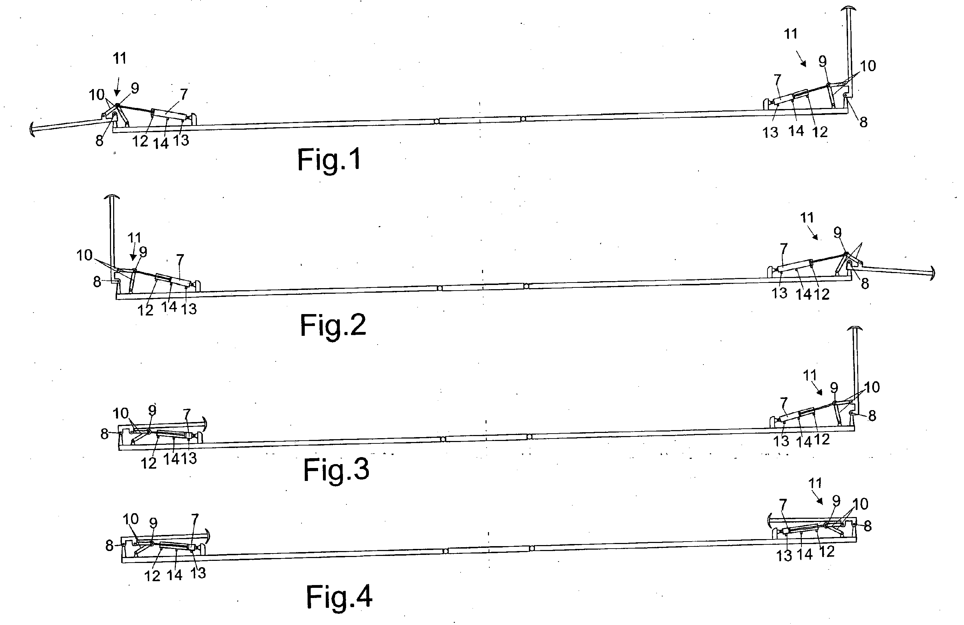

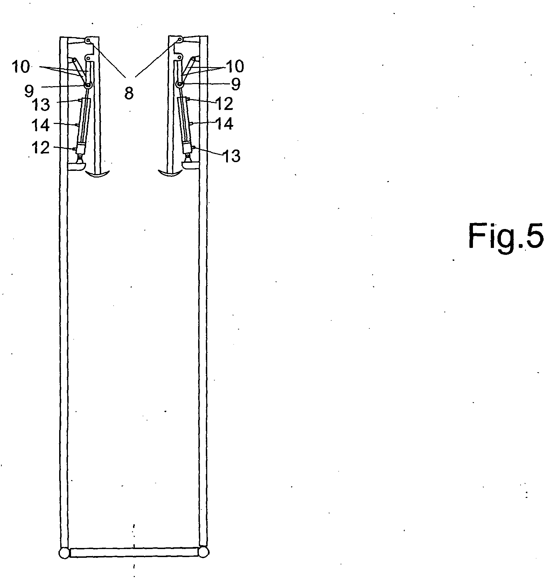

In den Fig. 1 bis 5 ist in schematischer Weise ein aus drei Segmenten 1, 2, 3 bestehender Auslegerbalken 4 dargestellt, der in nicht dargestellter Weise an dem Rahmen einer landwirtschaftlichen Maschine angeordnet ist. An dem Auslegerbalken sind in nicht dargestellter Weise Bodenbearbeitungswerkzeuge oder Säschare angeordnet. Die Außensegmente 1 und 3 des Auslegerbalkens 4 sind jeweils an dem Mittelbalken 2 mittels Gelenke 5 aus der in;Fig. 1 dargestellten Arbeitsstellung in die in Fig. 5 dargestellte Transportstellung zu verschwenken. Im Seitenbereich der Seitensegmente 1 und 3 des Auslegerbalken 4 ist jeweils ein Spuranreißer 6, der mittels des als doppel irkender Hydraulikzylinder ausgebildeten motorischen Stellelementes 7 ein- und ausschwenkbar angeordnet ist. Der Spuranreißer 6 ist mittels des Gelenkes 8 in dem äußeren Bereich des Auslegerbalkens 4 angelenkt. Zwischen dem Spuranreißer 6 und dem Auslegerbalken 4 ist ein aus zwei durch ein Gelenk 9 gelenkig mit einander verbundenen Hebeln 10 scherenartiges Hebelelement 11 angeordnet. Zwischen dem Gelenk 9 des scherenartigen Hebelelementes 11 und dem Auslegerbalken 4 ist der doppeltwirkende Hydraulikzylinder 7 angeordnet. An dem doppeltwirkenden Hydraulikzylinder 7 ist beabstandet zu den beiden angeschlossenen Hydraulikleitungen 12, 13, die jeweils im Endbereich des Hydraulikzylinders 7 angeschlossen sind, eine weitere Hydraulikleitung 14 angeschlossen. Die zusätzliche Hydraulikleitung 14 ist etwa in der Mitte der der Hubgänge des Hydraulikzylinders 7 an diesem angeschlossen. Die zusätzliche Hydraulikleitung 14 und die in dem Endbereich des Hydraulikzylinders 7 angeschlossenen Leitungen 13 sind an einem 3/2 Wegeventil 15 eines Steuerblockes 16 angeschlossen. Von den 3/2 Wegeventil 15 führt eine Hydraulikleitung 17 zu einem Steuerventil 18. An diesem Steuerventil 18 ist die andere, in dem Endbereich des Hydraulikzylinders 7 angeschlossene Leitung 12 angeschlossen. Weiterhin ist in der Leitung 17 ein 2/1-Wegeventil 19 des Steuerblockes 16 angeordnet. Vor dem 3/2 Wegeventil 15 ist in der Leitung 13 ein Drosselventil 19 angeordnet. Zwischen der Leitung 13 und der Leitung 17 ist eine ein Rückschlagventil 20 aufweisende Leitung angeordnet. Die Leitung 21 ist einerseits an die Leitung 13 zwischen dem Drosselventil 18 und dem Hydraulikzylinder 7 und andererseits an die Leitung 17 dem 3/2 Wegeventil 15 und dem 2/1 Wegeventil 22, welches in der Leitung 17 und dem Rückschlagventil 23, welches dem Steuerblock 16 zugeordnet ist, angeordnet.

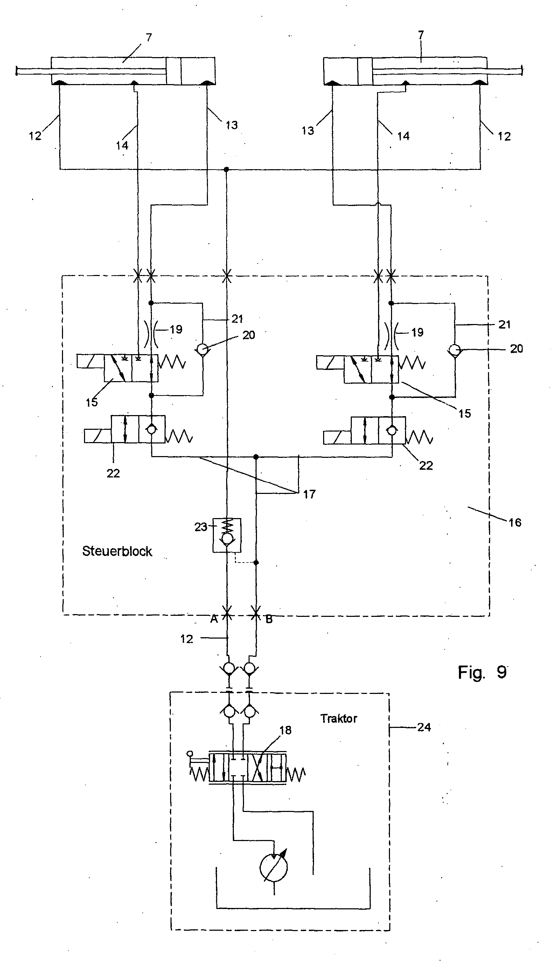

Die Verschaltung der Hydraulikzylinder 7 und der Ventile ist 15, 19, 20, 22, 23 in Fig. 9 dargestellt, wobei zwischen der Schlepperhydraulikanlage 24 und der den Spuranreißern 6 zugeordneten Hydraulikzylindern 7 und Steuerblock 16 mit mehreren Ventilen 15, 19, 20, 22, 23 angeordnet ist, über welche vorzuwählen ist, ob der linke oder rechte Spuranreißer 6 ausgefahren oder jeweils eingefahren werden soll. Das Ein- und Ausklappen der Spuranreißer 6 über die Hydraulikzylinder 7 erfolgt durch das Schleppersteuerventil 18.

Die Funktionsweise ist folgende:

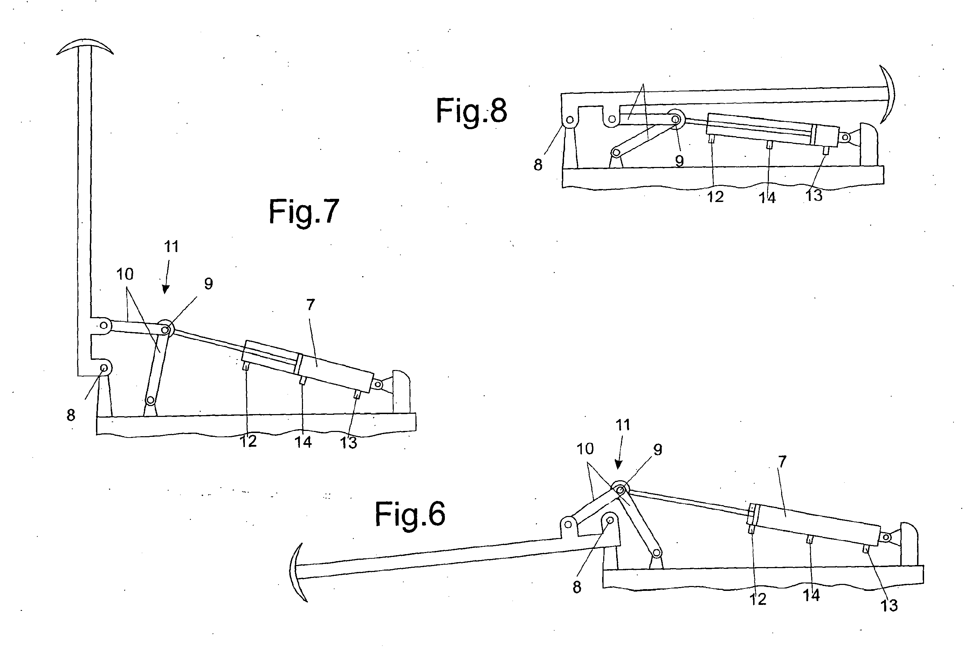

Wenn die Maschine sich in Transportstellung gemäß Fig. 5 befindet, wird, um die Maschine in Arbeitsstellung auf dem Feld zu bringen, durch nicht dargestellte Hydraulikzylinder die sich in senkrechter Stellung befindlichen Segmente 1, 3 des Auslegerbalkens 4 aus der in Fig. 5 dargestellten Transportstellung zunächst in die in Fig. 4 dargestellte Arbeitsstellung geschwenkt. Die Fig. 9 zeigt die Situation der Spuranreißer im eingeklappten Zustand gemäß Fig. 4 bzw. Fig. 8. Hierbei sind die beiden Hydraulikzylinder 7, die jedem Spuranreißer 6 zugeordnet sind, eingefahren. Wenn die Spuranreißer 6 aus den in Fig. 4 dargestellten Positionen gemäß Fig. 8 in die in Fig. 6 dargestellte Arbeitsposition gebracht werden soll, d.h. dass der eine Spuranreißer 6 ganz ausgeklappt ist und sich in Anreißerstellung gemäß Fig.6 befindet, während der andere Spuranreißer 6 zunächst noch eingeklappt bleibt, wird aufgrund der Hydraulikverschaltung gemäß Fig. 9 über die Wegeventile 22 vorgewählt, ob der linke oder rechte Spuranreißer 6 ganz in Anreißstellung gemäß Fig. 6 ausgeklappt werden soll. Durch Umschalten des linken Wegeventils 22 und durch die Beaufschlagung der Leitung 17 mit Druck durch das Umschalten des Schlepperventils 18 wird die Leitung 17 und die Leitung 13 des linken Hydraulikzylinders 7 mit Druck beaufschlagt, so dass der linke Hydraulikzylinder 7 ausfährt und den linken Spuranreißer 6 entsprechend Fig. 1 und 6 ausklappt. Wenn der rechte Spuranreißer 6 aus der in Fig. 8 dargestellten Stellung in die in Fig. 6 dargestellte Stellung verschwenkt werden soll, wird das rechte Wegeventil 23 umgeschaltet, so dass der rechte Hydraulikzylinder 7 ausfährt und den rechten Spuranreißer 6 entsprechend in die in Fig. 6 dargestellte Stellung verschwenkt. Durch die Hydraulikventile 15 wird vorgewählt, ob der Hydraulikzylinder 7 ganz oder nur halb einfahren soll, um den Spuranreißer 6 entsprechend in die in Fig. 8 dargestellte Stellung oder in die in Fig. 7 dargestellte Stellung zu bringen. In der in Fig. 7 dargestellten Position in der Wegeventile 15 wird der Hydraulikzylinder 7 nur soweit eingefahren, bis der Kolben des Hydraulikzylinders 7 den Anschluss 14 verschließt, so dass kein Öl mehr über die Leitung 14 zurückfließen kann.

Wenn also am Feldende die Spuranreißer 6 aus der Fig. 1 dargestellten Stellung in die in Fig. 2 dargestellte Stellung wechseln sollen, wird das rechte Wegeventil 15 umgeschaltet und das Steuerventil 18 wird betätigt, so dass über die Leitung 12 der Hydraulikzylinder 7 mit Druck beaufschlagt wird, so fährt der linke Hydraulikzylinder 7 soweit ein, bis der Kolben des Hydraulikzylinders 7 die Leitung 14 versperrt, so dass kein Öl mehr über die Leitung 14 zurückfließen kann, da der Rückfluss des Öls über die Leitung 13 durch das umgeschaltete Ventil 15 und das Rückschlagventil 20 verhindert ist. Die Beaufschlagung des rechten Hydraulikzylinders 7 mit Druck über die Leitung 12 hat keine Auswirkung über das Einfahren dieses Hydraulikzylinders 7, da der Rückfluss des Öls durch die entsprechende Stellung der Ventile 15 und das Rückschlagventil 20 verhindert wird, dass über die Leitungen 13, 14 Hydraulikflüssigkeit aus dem Hydraulikzylinder 7 strömen kann. Um den rechten Spuranreißer in die in Fig. 6 dargestellten Stellung entsprechend Fig. 2 zu bringen, wird anschließend das rechte Wegeventil 22 umgeschaltet, so dass Hydraulikflüssigkeit über die Leitung 17 und 13 in den rechten Hydraulikzylinder 7 strömen kann, so dass der Spuranreißer 6 in die Fig. 6 und 2 dargestellte Position zu bringen ist.

Um den Spuranreißer 6 ganz einklappen zu können ist es erforderlich, dass sich das Wegeventil 15 in der Fig. 9 dargestellten Position befindet.

Somit ist also durch eine entsprechende Stellung der Wegeventile 15 es möglich, vorzuwählen, ob der Hydraulikzylinder 7 ganz oder nur halb einfährt, um den Spuranreißer 6 ganz einzuklappen entsprechend Fig. 8 oder in eine senkrechte Stellung zu stellen, wie Fig. 7 dargestellt ist.

Falls der Spuranreißer 6 aus der in Fig. 7 dargestellten Außerbetriebsposition in die in Fig. 8 dargestellte eingeklappte Position, gebracht werden soll, wird durch die Ventile 22 im Steuerblock 16 vorgewählt.

Durch die Möglichkeit der stufenweisen Betätigung der Hydraulikzylinder 7 und des stufenweisen Einklappens und des Ausklappens des Spuranreißers 6 ist es möglich, z.B. wenn der jeweilige Spuranreißer 6 sich in der Fig. 1 und 6 dargestellten Position befinden und der linke Spuranreißer 6 gemäß Fig. 1 und 6 an und unter einem Baum mit dem äußeren Ende des Auslegerbalkens gearbeitete werden muss, kann der Spuranreißer 6 aus der in Fig. 6 dargestellten Position entsprechend Fig. 1 in die in Fig. 3 und 8 dargestellte Position ganz eingeklappt werden, wie Fig. 3 beispielhaft zeigt, in dem durch Betätigen des Schlepperventils 18 und des Ventils 15 der Hydraulikzylinder ganz eingefahren werden kann.

## Patentansprüche

1. Spuranreißer für eine landwirtschaftliche Maschine, der in deren Seitenbereich mittels eines zumindest zwei Leitungsanschlüsse aufweisenden doppelt wirkenden Hydraulikzylinder ein - und ausschwenkbar an Rahmenteilen der Maschine angeordnet ist, **dadurch gekennzeichnet, dass** an dem Hydraulikzylinder (7) und beabstandet zu den beiden angeschlossenen Hydraulikleitungen (12,13) zumindest eine weitere Hydraulikleitung (14) angeschlossen ist, dass die zusätzliche Hydraulikleitung (14) und die eine der in dem Endbereich des Hydraulikzylinders (7) angeschlossenen Leitungen (12,13) an ein 3/2-Wegeventil (15) angeschlossen sind, dass von dem 3/2-Wegeventil (15) eine Hydraulikleitung (17) zu einem Steuerventil (18) führt, dass an diesem Steuerventil (18), die andere der in dem Endbereich des Hydraulikzylinders (7) angeschlossenen Leitungen (12) angeschlossen ist.

2. Spuranreißer nach Anspruch 1, **dadurch gekennzeichnet, dass** die zusätzliche Hydraulikleitung (14) zumindest annähernd in der Mitte der Hublänge des Hydraulikzylinders (7) angeschlossen ist.

3. Spuranreißer nach Anspruch 1, **dadurch gekennzeichnet, dass** zwischen dem Spuranreißer (6) und dem Hydraulikzylinder (7) ein scherenartiges Hebelelement (11) angeordnet ist.
